# EUROPEAN PATENT APPLICATION

(11) **EP 4 360 842 A1**
(43) Date of publication of application: **01.05.2024**
(21) Application number: 22828237.2
(22) Date of filing: 09.06.2022
(51) Int. Cl.: B29B 15/14, B29C 64/118, B33Y 70/00, B33Y 80/00

(54) **FIBER-REINFORCED THERMOPLASTIC RESIN FILAMENT AND FABRICATED ARTICLE**

(30) Priority: 24.06.2021 JP 2021104731
(71) Applicant: DIC CORPORATION, Itabashi-ku Tokyo 174-8520 (JP)
(72) Inventor: NAKANISHI Koji, Ichihara-shi, Chiba 290-8585 (JP); ITO Daisuke, Tokyo 103-8233 (JP)
(74) Representative: TBK
(86) International application number: PCT/JP2022/023219
(87) International publication number: WO 2022/270320

(57) **Abstract**

The present invention provides a fiber-reinforced resin filament and an object, the fiber-reinforced resin filament containing a thermoplastic resin (A), a fibrous reinforcing material (B) having a fiber length of 3 to 9 mm and a fiber diameter of 5 to 20 µm, and an elastomer (C). The fiber-reinforced resin filament of the present invention provides a thermoplastic resin filament for 3D printing that can be wound up, and an object built by fused deposition modeling using this fiber-reinforced resin filament exhibits suitable mechanical properties. This finding has led to completion of the present invention.

## Description

### Technical Field

The present invention relates to a thermoplastic resin filament that has suitable mechanical properties and can be wound up, and to an object built using the filament.

### Background Art

Various industries have been researching and developing technologies for small-lot production in order to respond to the diversification of consumer needs. Among these, in fabrication technology using 3D printers, performance improvement of printers makes it possible to use engineering plastics (which hereinafter may be referred to as "resin") which were difficult to use in the past. When such resin is used to build an object by a fused deposition modeling 3D printer, the resin needs to be formed into filament or other shapes suitable for a building device. Unfortunately, fiber-reinforced resin with increased rigidity is difficult to wind up.

In this regard, a technique for producing a filament using resin such as polyphenylene sulfide (PPS) resin, polyetherimide (PEI) resin, polyethersulfone (PES) resin, and polyetheretherketone (PPEK) resin to build an object by a 3D printer has been studied (PTL 1). PTL 1 discloses a filament obtained by impregnating a reinforcing fiber bundle with resin, wherein the reinforced fiber bundle is formed by bundling multiple single fibers as reinforcing fiber, and the single fibers in the filament are not discontinuous. However, filaments that have suitable mechanical properties after building an object and can be wound up have not yet been achieved.

### Citation List

### Patent Literature

PTL 1: Japanese Unexamined Patent Application Publication No. 2020-179593

### Summary of Invention

### Technical Problem

An object of the present invention is to produce a thermoplastic resin filament for 3D printing that can be wound up and exhibits suitable mechanical properties after building an object.

### Solution to Problem

As a result of elaborate studies to solve the above problem, the inventors have found that a fiber-reinforced resin filament containing a thermoplastic resin (A), a fibrous reinforcing material (B) having a fiber length of 3 to 9 mm and a fiber diameter of 5 to 20 µm, and an elastomer (C) can provide a thermoplastic resin filament for 3D printing that can be wound up, and an object built using this fiber-reinforced resin filament by fused deposition modeling exhibits suitable mechanical properties. This finding has led to completion of the present invention.

Specifically, the present invention encompasses the following aspects.

[1] A fiber-reinforced thermoplastic resin filament containing a thermoplastic resin (A), a fibrous reinforcing material (B) having a fiber length of 3 to 9 mm and a fiber diameter of 5 to 20 µm, and an elastomer (C).
[2] The fiber-reinforced thermoplastic resin filament according to [1], wherein the fiber-reinforced thermoplastic resin filament has a tensile strength measured according to ISO 527-1-2 in the range of 50 to 170 MPa and a flexural strength measured according to ISO 178 in the range of 74 to 240 MPa.
[3] The fiber-reinforced thermoplastic resin filament according to [1] or [2], wherein the elastomer (C) is a thermoplastic elastomer.
[4] The fiber-reinforced thermoplastic resin filament according to any one of [1] to [3], wherein the thermoplastic resin (A) is one or more resins selected from polyarylene sulfide resin, polyamide resin, and polyester resin.
[5] The fiber-reinforced thermoplastic resin filament according to any one of [1] to [4], wherein the fiber-reinforced thermoplastic resin filament contains 30 to 93% by weight of the thermoplastic resin (A), 5 to 35% by weight of the fibrous reinforcing material (B) having a fiber length of 3 to 9 mm and a fiber diameter of 5 to 20 µm, and 2 to 35% by weight of the elastomer (C).
[6] An object built of the fiber-reinforced thermoplastic resin filament according to any one of [1] to [5] by fused deposition modeling.

### Advantageous Effects of Invention

The present invention can provide a thermoplastic resin filament for 3D printing that can be wound up and exhibits suitable mechanical properties after building an object using the thermoplastic resin filament.

### Description of Embodiments

Food and beverage products according to the present invention will be described below. The constituents described below are illustrative examples of an embodiment of the invention and should not be construed as limiting.

### (Thermoplastic Resin (A))

A fiber-reinforced thermoplastic resin filament of the present invention contains a thermoplastic resin (A) as an essential component. The thermoplastic resin (A) in the present invention, which is not limited as long as it exhibits plasticity upon heating and solidifies upon cooling and the effects of the present invention can be obtained, is preferably resin having a melting point of 150°C or higher, more preferably resin having a melting point of 170°C or higher in order to improve the robustness after building an object, and most preferably resin having a melting point of 270°C or higher.

Specific examples of the thermoplastic resin used in the present invention include general-purpose engineering plastics or super engineering plastics, such as polyamide resin having a melting point of 170°C or higher, preferably in the range of 170 to 310°C, such as polyamide resin having an aliphatic skeleton such as polyamide 6 (6-nylon), polyamide 66 (6,6-nylon) or polyamide 12 (12-nylon), and polyamide having an aromatic skeleton such as polyamide 6T (6T-nylon) and polyamide 9T (9T-nylon); polyester resin having a melting point of 220°C or higher, preferably in the range of 220 to 280°C, such as polybutylene terephthalate, polyisobutylene terephthalate, polyethylene terephthalate or polycyclohexene terephthalate; polyarylene sulfide resin represented by polyphenylene sulfide, having a melting point of 265°C or higher, preferably in the range of 265 to 350°C, more preferably in the range of 280 to 300°C; polyether ether ketone and polyaryletherketone having a melting point in the range of 300 to 390°C; liquid crystalline polymer having para-hydroxybenzoic acid in the skeleton and having a melting point of 300°C or higher, preferably from 300°C to lower than the thermal decomposition temperature (380°C); and thermoplastic resin having a melting point in the range of 170 to 390°C, such as syndiotactic polystyrene having a melting point of 220°C or higher, preferably in the range of 220 to 280°C. Among these, thermoplastic resin selected from polyarylene sulfide resin, polyamide resin, and polyester resin having high flame retardancy and dimensional stability is preferred, and polyarylene sulfide resin is particularly preferred.

In the present invention, the content of the thermoplastic resin is preferably 30 to 93% by weight with respect to 100% by weight of the entire fiber-reinforced thermoplastic resin filament, and preferably 45 to 80% by weight in order to achieve suitable mechanical strength when an object is built by fused deposition modeling.

The polyarylene sulfide resin suitably used as the thermoplastic resin in the present invention has a resin structure in which an aromatic ring and a sulfur atom are bonded as a repeating unit, and specifically has a structural moiety represented by the following formula (1) 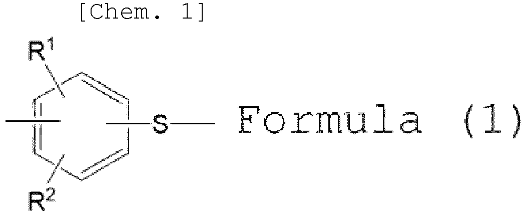
(where R¹ and R² each independently represent a hydrogen atom, an alkyl group with 1 to 4 carbon atoms, a nitro group, an amino group, a phenyl group, a methoxy group, or an ethoxy group) and, if necessary, a trifunctional structural moiety represented by the following formula (2) 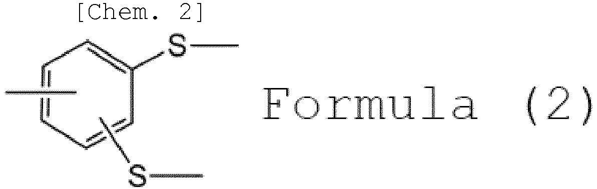
as repeating units. The amount of the trifunctional structural moiety represented by the following formula (8) is preferably 0.001 to 3 mol%, more preferably 0.01 to 1 mol% with respect to the total number of moles with the other structural moieties.

Here, in the structural moiety represented by the above formula (1), in particular, R¹ and R² in the formula are preferably hydrogen atoms in terms of mechanical strength of the polyarylene sulfide resin. In this case, examples include those bonded at the para position as represented by the following formula (3) and those bonded at the meta position as represented by the following formula (4).

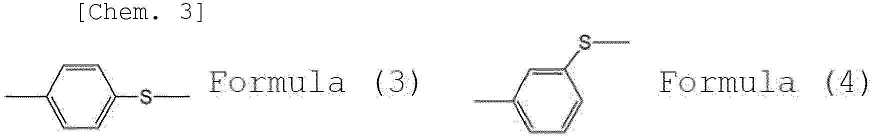

Among these, the sulfur atom bond to the aromatic ring in the repeating unit is preferably the structure bonded at the para position as represented by the structural formula (3) in terms of heat resistance and crystallinity of the polyarylene sulfide resin.

The polyarylene sulfide resin may contain not only the structural moieties represented by the above formulas (1) and (2) but also structural moieties represented by the following structural formulas (5) to (8) 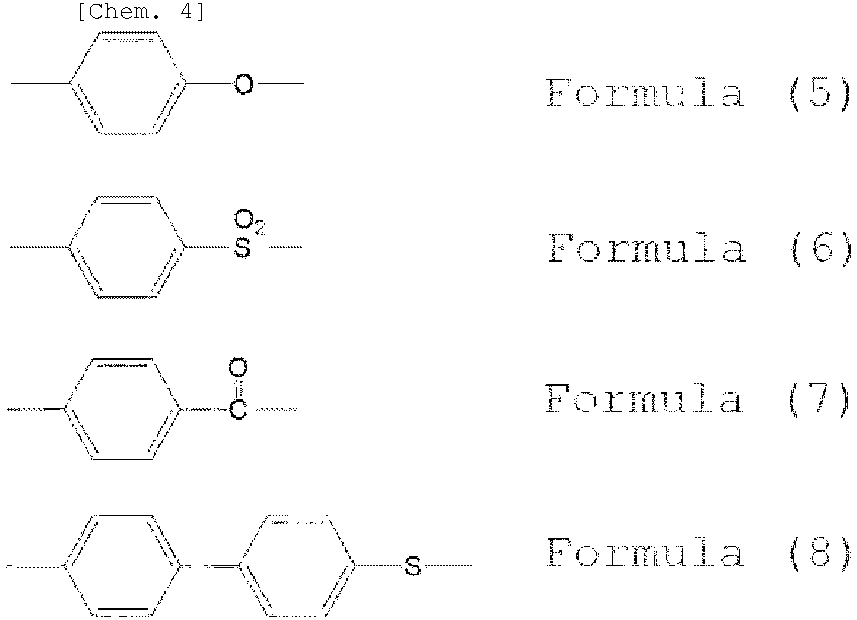 in the amount of 30 mol% or less of the total with the structural moieties represented by the above formulas (1) and (2). In particular, in the present invention, the amount of the structural moieties represented by the above formulas (5) to (8) is 10 mol% or less in terms of heat resistance and mechanical strength of the polyarylene sulfide resin. When the polyarylene sulfide resin contains the structural moieties represented by the above formulas (5) to (8), the binding mode of these moieties may be either random copolymer or block copolymer.

The polyarylene sulfide resin may have a naphthyl sulfide bond and the like in its molecular structure, preferably in the amount of 3 mol% or less, particularly preferably in the amount of 1 mol% or less with respect to the total number of moles with other structural moieties.

Examples of the method of producing the polyarylene sulfide resin include, but not limited to, 1) polymerizing a dihalogenoaromatic compound and, if necessary, a polyhalogenoaromatic compound or other copolymerization components in the presence of sulfur and sodium carbonate; 2) polymerizing a dihalogenoaromatic compound and, if necessary, a polyhalogenoaromatic compound or other copolymerization components in the presence of a sulfiding agent and the like in a polar solvent; and 3) self-condensing p-chlorothiophenol and, if necessary, other copolymerization components. Among these methods, the method 2) is the most versatile and preferred. During the reaction, alkali metal salt of carboxylic acid or sulfonic acid may be added in order to adjust the degree of polymerization, or alkali hydroxide may be added. In the method 2), those obtained by the following methods are preferred: a method of producing a polyarylene sulfide resin by introducing a hydrous sulfiding agent to a heated mixture containing an organic polar solvent and a dihalogenoaromatic compound at a rate that allows water to be removed from the reaction mixture, and reacting the dihalogenoaromatic compound and the sulfiding agent in the organic polar solvent, if necessary, with addition of a polyhalogenoaromatic compound, and by adjusting the amount of water in the reaction system to a range of 0.02 to 0.5 moles per mole of the organic polar solvent (see Japanese Unexamined Patent Application Publication No. H07-228699); and a method in which a dihalogenoaromatic compound and, if necessary, a polyhalogenoaromatic compound or other copolymerization components are reacted in the presence of a solid alkali metal sulfide and an aprotic polar organic solvent while the amount of alkali metal hydrosulfide and organic acid alkali metal salt is adjusted to 0.01 to 0.9 moles of the organic acid alkali metal salt per mole of the sulfur source and the moisture content in the reaction system is adjusted to the range of 0.02 moles or less per mole of the aprotic polar organic solvent (see WO2010/058713)). Specific examples of dihalogenoaromatic compounds include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenylsulfone, 4,4'-dihalodiphenylsulfoxide, 4,4'-dihalodiphenylsulfide, and compounds having an alkyl group with 1 to 18 carbon atoms on the aromatic ring of each compound listed above. Examples of polyhalogenoaromatic compounds include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. The halogen atom in each of the above compounds is preferably a chlorine atom or a bromine atom.

Examples of the post-treatment method for the reaction mixture containing the polyarylene sulfide resin obtained by the polymerization process include, but not limited to, the followings methods: (1) after completion of the polymerization reaction, the solvent is removed under reduced pressure or under normal pressure first from the reaction mixture as it is or after adding acid or base, then the solid left after solvent removal is washed with a solvent such as water, a reaction solvent (or an organic solvent having equivalent solubility for a low molecular weight polymer), acetone, methyl ethyl ketone, or alcohols, one or two or more times, followed by neutralization, rinsing, filtration, and drying; (2) after completion of the polymerization reaction, a solvent such as water, acetone, methyl ethyl ketone, alcohols, ethers, halogenated hydrocarbon, aromatic hydrocarbon, or aliphatic hydrocarbon (a solvent that is soluble in the polymerization solvent used and is a poor solvent at least for polyarylene sulfide) is added as a sedimentation agent to the reaction mixture to sediment solid products such as polyarylene sulfide and inorganic salt, and these sediments are filtered out, washed, and dried; (3) after completion of the polymerization reaction, a reaction solvent (or an organic solvent having equivalent solubility for a low molecular weight polymer) is added to the reaction mixture and stirred, then the mixture is filtered to remove a low molecular weight polymer and then washed with a solvent such as water, acetone, methyl ethyl ketone, or alcohols, one or two or more times, followed by neutralization, rinsing, filtration, and drying; (4) after completion of the polymerization reaction, water is added to the reaction mixture for rinsing, followed by filtration, if necessary, acid treatment during rinsing with addition of acid, and drying; and (5) after completion of the polymerization reaction, the reaction mixture is filtered, and if necessary, washed with a reaction solvent one or two or more times, followed by rinsing, filtration, and drying.

In the post-treatment methods listed in (1) to (5) above, drying of the polyarylene sulfide resin may be performed in a vacuum or may be performed in air or in an inert gas atmosphere such as nitrogen.

When the polyarylene sulfide resin is used as the thermoplastic resin in the present invention, the melt viscosity of the polyarylene sulfide resin is not limited as long as it is in any range that enables forming by fused deposition modeling. The melt viscosity is preferably in the range of 10 to 500 Pa·s at 300°C and a shear rate of 10 sec⁻¹, more preferably in the range of 25 to 450 Pa·s, and even more preferably in the range of 40 to 350 Pa·s.

The non-Newtonian index of the polyarylene sulfide resin is not limited as long as it is in any range that is suitable for forming by fused deposition modeling, and preferably in the range of 0.9 to 1.2.

In this way, in the polyarylene sulfide resin used in the present invention, the polyarylene sulfide resin itself has a melt viscosity suitable for forming by fused deposition modeling. In addition, among linear structures, the one having a linear chain structure with a low degree of branching with a non-Newtonian index of 0.9 to 1.2 prevents the melt viscosity of the melt-kneaded mixture from becoming excessively high by reacting with the fiber reinforcement bundles, can provide excellent formability without uneven thickness, and tends to improve the mechanical strength, especially impact resistance, of blow-molded products.

### (Fibrous Reinforcing Material (B) with Fiber Length of 3 to 9 mm and Fiber Diameter of 5 to 20 µm)

The fiber-reinforced thermoplastic resin filament of the present invention contains, as an essential component, a fibrous reinforcing material (B) having a fiber length of 3 to 9 mm and a fiber diameter of 5 to 20 um. The fibrous reinforcing material used in the present invention can be inorganic fibers and/or organic fibers that are processed into a fiber length of 3 to 9 mm and a fiber diameter of 5 to 20 um. Examples of the fibrous reinforcing material that can be used include glass fiber reinforcing materials, metal fiber reinforcing materials, Basalt fiber reinforcing materials, carbon fiber reinforcing materials, aramid fiber (wholly aromatic polyamide fiber) reinforcing materials, Nylon-MXD6 fiber (fibers of condensation copolymer of m-xylylenediamine and adipic acid) reinforcing materials, PET fiber reinforcing materials, PBT fiber reinforcing materials, wholly aromatic polyester fiber (Kevlar fiber) reinforcing materials, and other fibrous reinforcing materials. Glass fiber reinforcing materials and carbon fiber reinforcing materials are preferred because they provide suitable toughness when made into filaments.

The fibrous reinforcing material (B) can be a fiber reinforcement bundle as long as the effects of the present invention can be obtained. The fiber reinforcement bundle can be roving obtained by bundling single fiber bundles of the fibrous reinforcing material with a sizing agent containing at least one selected from maleic anhydride compounds, urethane compounds, acrylic compounds, epoxy compounds, and copolymers of these compounds.

These fibrous reinforcing materials can be produced by any method and are not limited as long as the effects of the present invention can be obtained. When glass fibers are used, the prepared glass material is fed into a melting furnace for vitrification and melt homogenization, and then the resulting molten glass is fed to a bushing device and continuously drawn out in the form of a filament from the bushing nozzle and formed into glass fibers. The glass fibers thus formed can be made into, for example, chopped strands cut into a predetermined length, yarns made by twisting strands, or rovings made by merging multiple strands, then coated (sizing) with various treatment agents, and bundled in predetermined numbers to form fiber reinforcement bundle glass fibers.

When carbon fibers are used in the method of producing the fibrous reinforcing material, PAN-based precursor fiber bundles are subjected to flame-resistant heat treatment in an inert atmosphere at 200 to 300°C, and the resulting flame-resistant fiber bundles are carbonized in an inert atmosphere at 300°C or higher in the carbonization process to produce carbon fibers. Subsequently, the carbon fibers can undergo the sizing process in the same manner as in the case of the glass fibers and made into chopped strands cut into a predetermined length, yarns made by twisting strands, or rovings made by merging multiple strands and wound into a cylindrical shape.

In the present invention, the content of the fibrous reinforcing material is not limited as long as the effects of the present invention can be obtained. The content of the fibrous reinforcing material is preferably 5 to 35% by weight with respect to 100% by weight of the entire fiber-reinforced thermoplastic resin filament, and preferably 10 to 30% by weight in order to achieve suitable mechanical strength when an object is built by fused deposition modeling.

### (Elastomer (C))

The fiber-reinforced thermoplastic resin filament of the present invention contains an elastomer (C) as an essential component. As the elastomer (C) used in the present invention, any known elastomers can be used as long as the effects of the present invention can be obtained. Thermoplastic elastomers are preferred as these elastomers. It is preferable that these thermoplastic elastomers have a functional group that can react with at least one group selected from the group consisting of hydroxy groups, amino groups, carboxyl groups, and salts of carboxyl groups. This results in a resin composition that is particularly excellent in adhesion, impact resistance, and the like and can suppress the amount of gas generation by heating. Examples of such a functional group include epoxy groups, amino groups, hydroxyl groups, carboxyl groups, mercapto groups, isocyanate groups, oxazoline groups, and groups represented by the formula: R(CO)O(CO)- or R(CO)O- (where R represents an alkyl group with 1 to 8 carbon atoms). A thermoplastic elastomer having such a functional group can be obtained, for example, by copolymerization of an α-olefin and a vinyl polymerizable compound having the above functional group. Examples of the α-olefin include α-olefins with 2 to 8 carbon atoms, such as ethylene, propylene, and butene-1, and acid-modified ethylene-α-olefin copolymer. Examples of the vinyl polymerizable compound having the functional group include α,β-unsaturated carboxylic acids such as (meth)acrylic acids and (meth)acrylic esters and alkyl esters thereof, maleic acid, fumaric acid, itaconic acid, and other α,β-unsaturated dicarboxylic acids with 4 to 10 carbon atoms and derivatives thereof (mono or diesters, acid anhydrides thereof, etc.), as well as glycidyl (meth)acrylate such as ethylene-glycidyl methacrylate copolymer. Among these, it is preferable to use one or more selected from acid-modified ethylene-α-olefin copolymer, ethylene-glycidyl methacrylate copolymer, and ethylene-propylene copolymer and ethylene-butene copolymer having at least one functional group selected from the group consisting of epoxy groups, carboxyl groups, and groups represented by the formula: R(CO)O(CO)- or R(CO)O-(where R represents an alkyl group with 1 to 8 carbon atoms), in order to improve toughness and impact resistance.

In the present invention, the content of the elastomer is not limited as long as the effects of the present invention can be obtained. The content of the elastomer is preferably 2 to 35% by weight with respect to 100% by weight of the entire fiber-reinforced thermoplastic resin filament, and preferably 10 to 20% by weight in order to achieve suitable mechanical strength when an object is built by fused deposition modeling.

### (Fiber-Reinforced Thermoplastic Resin Filament)

The present invention relates to a fiber-reinforced thermoplastic resin filament containing the components (A) to (C) as essential components. The fiber-reinforced thermoplastic resin filament may contain known additives in addition to the components (A) to (C) as long as the effects of the invention of the present application are not impaired. These additives include mold release agents, colorants, heat resistant stabilizers, UV stabilizers, foaming agents, rust preventives, crystal modifiers, lubricants, coupling agents, various fibrous fillers such as fibrous reinforcing materials having fiber lengths and fiber diameters different from those of the component (B), bead-like and flake-like fillers, and roved fillers of these fillers.

The fiber-reinforced thermoplastic resin filament of the present invention may have any shape as long as the effects of the present invention can be obtained. It is preferable that the diameter of a cross section perpendicular to the drawing direction of filament be 1 to 4 mm, preferably 1.5 mm to 3.5 mm, and more preferably 1.75 mm to 3.0 mm for easier handling during winding and building. The length of the filament in the drawing direction is not limited and can be set as appropriate according to the desired application.

The flexural modulus of the fiber-reinforced thermoplastic resin filament of the present invention is not limited as long as the effects of the present invention can be obtained. The flexural modulus of a molded product obtained by molding the filament by injection molding is preferably 2 to 25 GPa as measured by the ISO 178 bending test, and it is more preferably 5 to 20 GPa for easier handling of the filament. Here, measurement was performed using a molded product by injection molding for the purpose of measuring the flexural modulus of the filament itself, because if formed by fused deposition modeling, test specimen thickness and the like may affect the measurement.

The tensile strength of the fiber-reinforced thermoplastic resin filament of the present invention is not limited as long as the effects of the invention can be obtained. The tensile strength as measured by the ISO 527-1-2 tensile test is preferably 50 to 170 MPa, and more preferably 60 to 150 in order to improve building characteristics. Here, measurement was performed using a molded product by injection molding for the purpose of measuring the tensile strength of the filament itself, because if formed by fused deposition modeling, test specimen thickness and the like may affect the measurement.

The fiber-reinforced thermoplastic resin filament of the present invention is not limited in its applications and finds applications, for example, in building an object by feeding the filament to a building device. Examples of such a building device include a chamber-type device capable of heating a build chamber, a top heating-type device with a heater near a building nozzle, and a building device capable of heating a build table. It is particularly preferable to be fed to a building device using fused deposition modeling in order to achieve the effects of the present invention. An object with high impact resistance can be fabricated by being built using the fiber-reinforced thermoplastic resin filament of the present invention.

The method of producing the fiber-reinforced thermoplastic resin filament containing the components (A) to (C) as essential components in the present invention and other additional components is not limited as long as the effects of the present invention can be obtained. For example, the thermoplastic resin (A) as a base material resin, the fibrous reinforcing material (B) having a fiber length of 3 to 6 mm and a fiber diameter of 5 to 20 um, and the elastomer (C) are mixed with a processing stabilizer, an oxidation stabilizer, a forming aid, and other additives, and then fed into a single screw or twin screw extruder with a heating mechanism for melt kneading at a temperature equal to or higher than the melting point of the thermoplastic resin, preferably in a temperature range of the melting point +10°C or higher, more preferably in a temperature range of the melting point +10°C to the melting point +100°C, and even more preferably in a temperature range of the melting point +20°C to the melting point +50°C. After melt kneading, additive components may be added as necessary, and the mixture may be further kneaded into a filament using a single screw or twin screw extruder. Alternatively, the mixture may be made into a filament directly after melt kneading.

### [Examples]

The present invention will be described more specifically with the following examples, but the present invention is not limited only to these examples.

### (Production Method for Fibrous Reinforcing Material)

### [Production Example 1]

A glass material prepared was fed into a melting furnace for vitrification and melt homogenization. The resulting molten glass was then fed to a bushing device to produce filament-like glass fibers. The resulting glass fiber filaments were coated with a sizing agent (sizing) and bundled to produce fibrous reinforcing material glass fibers (fiber diameter of 10 µm). The resulting glass fibers were cut into 3-mm lengths to produce glass fiber chopped strands.

### [Production Examples 2 and 3]

Glass fibers were produced by the same operation as in Production Example 1 above to produce 1-mm (Production Example 2) and 10-mm (Production Example 3) glass fiber chopped strands.

### [Production Example 4]

PAN-based precursor fiber bundles were subjected to flame-resistant heat treatment in an inert atmosphere at 200 to 300°C. The resulting flame-resistant fiber bundles were carbonized in an inert atmosphere at 300°C or higher in the carbonization process to produce carbon fiber bundles. The subsequent process was performed in the same manner as for the glass fibers described above to produce carbon fiber chopped strands cut into 6 mm lengths through the sizing process.

### (Production of Fiber-Reinforced Thermoplastic Resin Filament)

### [Example 1]

PPS resin (manufactured by DIC Corporation), glass fibers produced in Production Example 1, and elastomer (product name TAFMER, manufactured by Mitsui Chemicals, Inc.) were kneaded by a twin screw extruder (manufactured by Coperion GmbH) in the amounts listed in Table 1 to produce fiber reinforced thermoplastic resin pellets. The resulting fiber-reinforced thermoplastic resin pellets were formed by a single screw extruder (manufactured by TECHNOVEL CORPORATION) into a fiber-reinforced thermoplastic resin filament having a fiber diameter of 1.75 mm.

### [Examples 2 to 9]

Fiber-reinforced thermoplastic resin filaments of Examples 2 to 9 were produced in the same manner as in Example 1, except that the kind and amount of each component were changed to those listed in Tables 1 and 2.

### [Comparative Examples 1 to 7]

Thermoplastic resin filaments of Comparative Examples 1 to 7 were produced in the same manner as in Example 1, except that the kind and amount of each component were changed to those listed in Table 2.

### (Bending Test)

To measure the flexural modulus of the above compositions, ISO3167 type A dumbbells were made at injection molder temperatures of 290°C to 330°C. Measurement was performed under three-point bending with a distance of 64 mm between supports and a speed of 5 mm/min.

### (Tensile Test)

To measure the tensile strength of the above compositions, ISO3167 type A dumbbells were made at injection molder temperatures of 290°C to 330°C. Measurement was performed under a speed of 5 mm/min.

The fragility and surface state of the filaments were evaluated by the following folding test and filament state observation.

### (Folding Test)

The filaments produced in the above examples were each cut into a 20-cm length, and a folding test was conducted in which the filament was held at both ends and folded in the direction to bring both ends closer to each other. Virtual lines perpendicular to the tangent lines to both ends of the filament were set, and the intersection of the two virtual lines drawn from the filament ends was set as a virtual center point. Folding was performed as described above, and the angle indicated by the filament middle portion - the virtual center point - the filament end at filament break was measured and evaluated according to the following criteria.
A: Not broken even at 180°
B: Broken between 90° and 180°
C: Broken between 45° and 90°
D: Broken at less than 45°

### (Filament State Observation)

The filaments produced in the above examples were each cut into a 20-cm length, and filament diameters were measured at three points 5 cm, 10 cm, and 15 cm from one end. The filament diameters were measured using five samples for each example, and the value obtained by subtracting the extrusion diameter of 1.75 mm set in the extruder from the average value of 15 points in total was evaluated according to the following criteria.
A: Filament diameter within ±0.05 mm of the set diameter
B: Filament diameter greater than ±0.05 mm and within ±0.10 mm of the set diameter
C: Filament diameter greater than ±0.05 mm and within ±0.15 mm of the set diameter
D: Filament diameter larger than ±0.15 mm of the set diameter

The compositions of the above examples and the results obtained from the bending test, tensile test, folding test, and filament state observation are listed in Tables 1 and 2.

**[Table 1]**

| | | | Exa mpl e 1 | Exa mpl e 2 | Exa mpl e 3 | Exa mpl e 4 | Exa mpl e 5 | Exa mpl e 6 | Exa mpl e 7 | Exa mpl e 8 | Exa mpl e 9 |
|---|---|---|---|---|---|---|---|---|---|---|---|
| Compo sitio n | Thermo plasti c resin (A) | PPS resin | 73 | 77 | 60 | 67 | 45 | 65 | 30 | 57 | 90 |
| | Fibrou s reinfo rcing materi al (B) | Glass fiber (Prod uctio n Examp le 1) | 15 | | | | | | 35 | 15 | 5 |
| | | Glass fiber (Prod uctio n Examp le 2) | | | | | | | | | |
| | | Glass fiber (Prod uctio n Examp le 3) | | | | | | | | | |
| | | Carbo n Fiber (Prod uctio n Examp le 4) | | 10 | 10 | 15 | 27 | 20 | | | |
| | Elastomer (C) | | 10 | 10 | 27 | 15 | 25 | 13 | 32 | 25 | 3 |
| | Additive | | 2 | 3 | 3 | 3 | 3 | 2 | 3 | 3 | 2 |
| | Total amount | | 100 | 100 | 100 | 100 | 100 | 100 | 100 | 100 | 100 |
| Tensi le test | Streng th | MPa | 85 | 88 | 70 | 116 | 105 | 138 | 95 | 110 | 136 |
| Bendi ng test | Streng th | MPa | 152 | 143 | 117 | 182 | 168 | 223 | 160 | 145 | 103 |
| | Modulu | GPa | 7 | 7 | 6 | 10 | 9 | 14 | 4 | 7 | 4 |
| | s | | | | | | | | | | |
| Folding test | | | B | B | A | A | B | B | B | A | B |
| Filament state observation | | | B | B | B | A | A | B | B | B | B |

**[Table 2]**

| | | | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 | Compa rativ e Examp le 7 |
|---|---|---|---|---|---|---|---|---|---|
| Compo sitio n | Thermo plasti c resin (A) | PPS resin | 20 | 96 | 87 | 87 | 73 | 73 | 73 |
| | Fibrou s reinfo rcing materi al (B) | Glass fiber (Prod uctio n Examp le 1) | 55 | 2 | 10 | | | | |
| | | Glass fiber (Prod uctio n Examp le 2) | | | | | 15 | | |
| | | Glass fiber (Prod uctio n Examp le 3) | | | | | | 15 | 15 |
| | | Carbo n Fiber (Prod uctio n Examp le 4) | | | | 10 | | | |
| | Elastomer (C) | | 20 | 1 | | | 10 | 10 | 10 |
| | Additive | | 5 | 1 | 3 | 3 | 2 | 2 | 2 |
| | Total amount | | 100 | 100 | 100 | 100 | 100 | 100 | 100 |
| Tensi le test | Streng th | MPa | - | 49 | 90 | 143 | 50 | 130 | 130 |
| Bendi ng test | Streng th | MPa | - | 54 | 146 | 252 | 64 | 199 | 199 |
| | Modulu s | GPa | - | 2 | 6 | 11 | 3 | 15 | 15 |
| Folding test | | | D | D | D | D | A | D | D |
| Filament state observation | | | C | D | D | C | D | C | C |

As is evident from the above results, the fiber-reinforced thermoplastic resin filaments of Examples 1 to 9 according to the present invention were superior in tensile strength and flexural strength to the thermoplastic resin filaments of Comparative Examples 1 to 7, and were windable filaments. Further, the filaments of Examples 1 to 9 were excellent in dimensional stability during filament production.

### (Fabrication of Object)

Each of the thermoplastic resin filaments of Examples 1 to 9 and Comparative Examples 1 to 7 was fed to Apium P220 for building an object by fused deposition modeling. The nozzle temperature during building was set to 320°C to 380°C, the table temperature was set to 60°C to 150°C, and the external heater was set to 100°C to 200°C. When the thermoplastic resin filaments of Examples 1 to 9 and Comparative Examples 5 and 6 were used, objects were successfully fabricated, whereas when the thermoplastic resin filaments of Comparative Examples 1 to 4 and 7 were used, the shape of the objects was abnormal and desired objects were unable to be fabricated.

## Claims

1. A fiber-reinforced thermoplastic resin filament comprising:
a thermoplastic resin (A);
a fibrous reinforcing material (B) having a fiber length of 3 to 9 mm and a fiber diameter of 5 to 20 um; and
an elastomer (C).

2. The fiber-reinforced thermoplastic resin filament according to claim 1, wherein the fiber-reinforced thermoplastic resin filament has a tensile strength measured according to ISO 527-1-2 in a range of 50 to 170 MPa and a flexural strength measured according to ISO 178 in a range of 74 to 240 MPa.

3. The fiber-reinforced thermoplastic resin filament according to claim 1 or 2, wherein the elastomer (C) is a thermoplastic elastomer.

4. The fiber-reinforced thermoplastic resin filament according to claim 1 or 2, wherein the thermoplastic resin (A) is one or more resins selected from polyarylene sulfide resin, polyamide resin, and polyester resin.

5. The fiber-reinforced thermoplastic resin filament according to claim 1 or 2, wherein the fiber-reinforced thermoplastic resin filament comprises:
30 to 93% by weight of the thermoplastic resin (A);
5 to 35% by weight of the fibrous reinforcing material (B) having a fiber length of 3 to 9 mm and a fiber diameter of 5 to 20 um; and
2 to 35% by weight of the elastomer (C).

6. An object built of the fiber-reinforced thermoplastic resin filament according to claim 1 by fused deposition modeling.
